# EUROPÄISCHE PATENTSCHRIFT

(11) **EP 1 119 885 B1**
(45) Veröffentlichungstag und Bekanntmachung des Hinweises auf die Patenterteilung: **26.05.2004**
(21) Anmeldenummer: 99939368.9
(22) Anmeldetag: 18.06.1999
(51) Int. Cl.: H01R 4/24

(54) **ANORDNUNG ZUR KONTAKTIERUNG EINES EINEN ELEKTRISCHEN ANSCHLUSS AUFWEISENDEN BAUTEILS MIT EINER ELEKTRISCHEN SCHALTUNG**
ARRANGEMENT FOR CONTACTING A COMPONENT WITH AN ELECTRICAL TERMINAL WITH AN ELECTRIC CIRCUIT
DISPOSITIF DE CONTACT ENTRE UNE PIECE PRESENTANT UNE CONNEXION ELECTRIQUE ET UN CIRCUIT ELECTRIQUE

(30) Priorität: 17.10.1998 DE 19848039
(43) Veröffentlichungstag der Anmeldung: 01.08.2001
(73) Patentinhaber: ROBERT BOSCH GMBH, 70442 Stuttgart (DE)
(72) Erfinder: SCHNALZGER, Günther, D-87544 Blaichach (DE); FLUCK, Tobias, D-87501 Immenstadt (DE); TIMMERMANN, Stefan, D-87545 Burgberg (DE)
(86) Internationale Anmeldenummer: PCT/DE1999/001790
(87) Internationale Veröffentlichungsnummer: WO 2000/024088

(56) Entgegenhaltungen:
- EP-A- 0 829 944
- DE-A- 19 619 968
- DE-A- 19 629 643
- DE-A- 19 718 242
- DE-U- 29 701 467

## Beschreibung

### Stand der Technik

Die Erfindung betrifft eine Anordnung zur Kontaktierung eines einen elektrischen Anschluß aufweisenden Bauteils mit einer elektrischen Schaltung. Die erfindungsgemäße Anordnung ist insbesondere zur Kontaktierung eines Magnetventils oder auch eines Elektromotors einer eine Schlupfregeleinrichtung aufweisenden hydraulischen Fahrzeugbremsanlage mit einer elektronischen Regelschaltung zur Schlupfregelung vorgesehen. Die Bezeichnung elektrische Schaltung soll elektronische Schaltungen und dgl. mit umfassen.

Aus der DE-A- 196 19 968 ist eine Druckregelvorrichtung für eine elektrohydraulische Fahrzeugbremsanlage bekannt. Die bekannte Druckregelvorrichtung weist eine elektrische Schaltung sowie einen Hydraulikblock, in den Magnetventile eingesetzt sind, auf. Zur Kontaktierung der Magnetventile mit der elektrischen Schaltung sind Steckkontakte in Form von gebogenen Drähten vorgesehen, die von der elektrischen Schaltung zu den Magnetventilen führen. Ein Ende der Steckkontakte ist in eine Ausnehmung in Wicklunsgträgern von Spulen der Magnetventile eingesetzt, wobei in der Ausnehmung ein Spulenkontakt einliegt, so daß der Steckkontakt ohne Schweißen oder Löten mit dem Spulenkontakt verbunden ist. Als Alternative ist angegeben, daß der Steckkontakt in eine Schneidklemme in der Ausnehmung des Wicklungsträgers des Magnetventils eingesetzt werden kann.

Ein anderes Ende des Steckkontakts ist mit einer Spreitkontur versehen und reibschlüssig in eine Öffnung einer die elektrische Schaltung tragenden Platine gesteckt.

Die bekannte Vorrichtung hat den Nachteil, daß sie den drahtförmigen Steckkontakt als separates Bauteil zur Kontaktierung der Magnetventile mit der elektrischen Schaltung benötigt. Der Steckkontakt muß zunächst in die Aufnahme der Magnetventile eingesetzt werden, bevor die elektrische Schaltung auf die Steckkontakte der Magnetventile gesteckt wird. Problematisch erscheint auch die Ausrichtung der in die Ausnehmungen der Wicklunsgträger der Magnetventile eingesetzten Steckkontakte in bezug auf die Öffnungen in der Platine der elektrischen Schaltung, die so genau sein muß, daß beim Stecken der elektrischen Schaltung auf die Steckkontakte jeder Steckkontakt seine Öffnung trifft.

Aus EP-A-829 944 ist ferner ein Stator eines Elektromotors mit einer Anschlußleiste bekannt, welche sich kreuzende Schlitze zur Aufnahme von Drahtenden von Wicklungsdrähten und Schlitzklemmen aufweist. Dabei dient ein Teil der einzeln steckbaren Schlitzklemmen zum Fixieren der Drahtenden in der Anschlußleiste sowie ein anderer Teil dem Anschluß von Flachsteckern. Die fixierenden Schlitzklemmen können auch zu Meßzwecken vorübergehend kontaktiert werden.

### Vorteile der Erfindung

Bei der erfindungsgemäßen Anordnung zur Kontaktierung eines einen elektrischen Anschluß aufweisenden Bauteils mit einer elektrischen Schaltung mit den Merkmalen des Anspruchs 1 weist die elektrische Schaltung eine Schlitzklemme für jeden zu kontaktierenden elektrischen Anschluß auf. Durch Aufsetzen der elektrischen Schaltung auf das Bauteil / die Bauteile ist der elektrische Anschluß / sind die elektrischen Anschlüsse des Bauteils / der Bauteile in die Schlitzklemme / Schlitzklemmen gesteckt und dadurch kontaktiert. Durch eine mechanisch feste Verbindung der Schlitzklemme mit der elektrischen Schaltung ist die Ausrichtung der Schlitzklemme in bezug auf den elektrischen Anschluß sichergestellt, was insbesondere bei einer Anzahl elektrischer Bauteile mit jeweils mehreren elektrischen Anschlüssen von erheblichem Vorteil für die Steckbarkeit der elektrischen Schaltung auf die Bauteile ist. Weiterer Vorteil der Erfindung ist, daß sie keine separaten Kontaktierelemente benötigt, die als Einzelteile sowohl mit den elektrischen Anschlüssen der zu kontaktierenden Bauteile als auch mit der elektrischen Schaltung verbunden werden müssen. Der Arbeitsschritt des Kontaktierens beschränkt sich auf das Stecken der elektrischen Schaltung auf die Bauteile. Hinzu kommt der Vorteil, daß durch die scherende Wirkung von Klemmschenkeln der Schlitzklemme eine eventuelle Isolation der elektrischen Anschlüsse durchtrennt und eine eventuelle, die elektrische Leitfähigkeit verschlechternde Oxidschicht oder dgl. beim Stecken der elektrischen Schaltung auf die Bauteile und dem mit dem Stecken einhergehenden Kontaktieren abgetragen wird. Zugleich wird eine Kontaktfläche zwischen dem elektrischen Anschluß und der Schlitzklemme vergrößert, so daß sich insgesamt eine qualitativ hochwertige Kontaktierung mit einem niedrigen Übergangswiderstand ergibt. Weiterer Vorteil der erfindungsgemäßen Anordnung zur Kontaktierung ist deren sehr niedrige Fehlerrate bei der Montage.

Die Unteransprüche haben vorteilhafte Ausgestaltungen und Weiterbildungen der im Anspruch 1 angegebenen Erfindung zum Gegenstand.

Besonders vorteilhaft ist eine Ausgestaltung der erfindungsgemäßen Anordnung, bei der die elektrische Schaltung gemäß Anspruch 3 ein Stanzgitter aufweist, durch das elektrische und/oder elektronische Bauelemente der Schaltung elektrisch miteinander verschaltet und mechanisch befestigt sind. Diese Ausgestaltung der Erfindung hat insbesondere den Vorteil, daß die Schlitzklemmen gemäß Anspruch 4 einstückig mit dem Stanzgitter ausgebildet sein können. Die Schlitzklemmen werden erforderlichenfalls nach dem Stanzen des Stanzgitters umgebogen. Sie werden in einem Arbeitsgang mit dem Stanzen des Stanzgitters hergestellt, so daß kein separater Arbeitsgang für das Herstellen der Schlitzklemmen erforderlich ist. Des weiteren entfällt ein Befestigen der Schlitzklemmen am Stanzgitter, da die Schlitzklemmen einstückig mit dem Stanzgitter sind, und es ergibt sich eine Materialeinsparung, da die Schlitzklemmen zusammen mit dem Stanzgitter aus ein- und demselben Blech wie das Stanzgitter ausgestanzt sind und nicht aus einem extra Blechstück ausgestanzt werden müssen.

### Zeichnung

Die Erfindung wird nachfolgend anhand eines in der Zeichnung dargestellten Ausführungsbeispiels näher erläutert. Es zeigen:
- Figur 1: eine erfindungsgemäße Anordnung, teilweise geschnitten;
- Figur 2: eine vergrößerte Darstellung einer Einzelheit 11 in Figur 1, wobei eine Schnittebene durch Linie II-II in Figur 3 angegeben ist;
- Figur 3: einen Schnitt entlang Linie III-III in Figur 2; und
- Figur 4: einen Schnitt entlang Linie IV-IV in Figur 2.

### Beschreibung des Ausführungsbeispiels

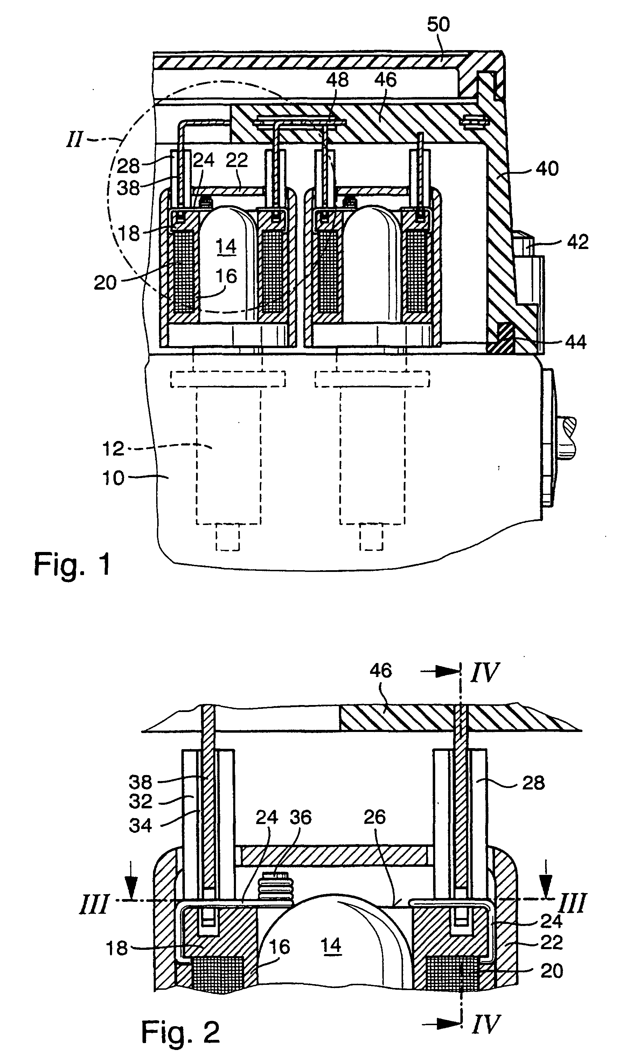

Das in Figur 1 dargestellte Ausführungsbeispiel einer erfindungsgemäßen Anordnung umfaßt einen Hydraulikblock 10, in den Magnetventile 12 eingesetzt sind. Der Hydraulikblock 10 ist Teil einer im übrigen nicht dargestellten, eine Schlupfregeleinrichtung aufweisenden hydraulischen Fahrzeugbremsanlage. Die Magnetventile 12 sind näherungsweise stiftförmig, sie weisen einen hydraulischen Teil auf, mit dem sie in den Hydraulikblock 10 eingesetzt sind, und einen Magnetteil, der aus dem Hydraulikblock 10 vorsteht, auf. Der Magnetteil der Magnetventile 12 befindet sich in einem Ventildom 14. Auf den Ventildom 14 ist mit leichter Preßpassung ein Wicklungsträger 16 gesteckt. Der Wicklungsträger 16 ist ein aus Kunststoff spritzgegossenes rohrförmiges Teil mit Stirnflanschen 18 an seinen beiden Enden. Zwischen den Stirnflanschen 18 ist eine Spule 20 auf den Wicklungsträger 16 gewickelt. Auf den Magnetteil der Magnetventile 12 ist ein topfförmiges Gehäuse 22 aufgesetzt, das den Ventildom 14 sowie den Wicklungsträger 16 mit der Spule 20 umschließt.

Zwei Drahtenden 24 der Spule 20 sind um einen dem Hydraulikblock 10 fernen Stirnflansch 18 herum auf eine dem Hydraulikblock 10 abgewandte Stirnfläche 26 des Stirnflansches 18 geführt (Figur 2). Von der dem Hydaulikblock 10 abgewandten Stirnfläche 26 des dem Hydraulikblock 10 fernen Stirnflansches 18 stehen zwei Halterungen 28 von dem dem Hydraulikblock 10 fernen Stirnflansch 18 achsparallel ab. Die Halterungen 28 sind einstückig mit dem Stirnflansch 18 und somit einstückig mit dem Wicklungsträger 16.

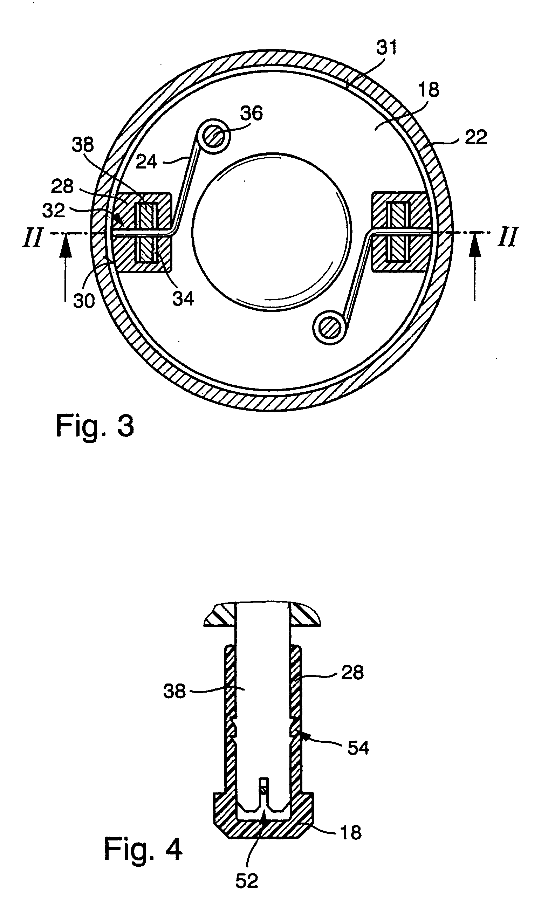

Die beiden Halterungen 28 sind einander gegenüber auf dem Stirnflansch 18 angeordnet, sie sind prismatisch und weisen eine nahezu rechteckige Querschnittsform auf, wobei einander abgewandte Außenflächen 30 der Halterungen 28, die mit einem Rand 31 des Stirnflansches 18 bündig sind, der Rundung des Randes 31 entsprechend gewölbt sind (Figur 3).

Die beiden Halterungen 28 sind mit zwei einander kreuzenden Schlitzen 32, 34 versehen: Einer der beiden Schlitze 32 ist radial zum Wicklungsträger 16 angeordnet und wird nachfolgend als Radialschlitz 32 bezeichnet. Er verläuft in Längsrichtung bis zur Stirnfläche 26 des Stirnflansches 18, von der die Halterungen 28 abstehen. Eine Schlitzbreite des Radialschlitzes 32 entspricht einem Durchmesser der Drahtenden 24 der Spulen 20. Der Radialschlitz 32 geht quer durch die Halterungen 28 hindurch, d. h. der Radialschlitz 32 ist an seinen beiden Seiten offen. Die Drahtenden 24 sind auf dem Stirnflansch 18 des Wicklungsträgers 16 aufliegend durch den Radialschlitz 32 der Halterungen 28 hindurchgeführt und um jeweils einen Fixierzapfen 36 gewickelt, der ebenfalls von der dem Hydraulikblock 10 abgewandten Stirnfläche 26 des dem Hydraulikblock 10 fernen Stimflansches 18 des Wicklungsträger 16 absteht. Auf diese Weise sind die beiden Drahtenden 24 der Spule 20 auf der dem Hydraulikblock 10 abgewandten Stirnfläche 26 des dem Hydraulikblock 10 fernen Stimflansches 18 des Wicklungsträgers 16 fixiert.

Der andere Schlitz 34 in der Halterung 28 ist quer zum Radialschlitz 32 und tangential zum Wicklungsträger 16 in der Halterung 28 angebracht. Dieser Schlitz 34 bildet eine Aufnahme 34 für eine Schlitzklemme 38. Der die Aufnahme 34 bildende Schlitz geht in Längsrichtung durch den Halter 28 hindurch und reicht bis in den Stirnflansch 18 des Wicklungsträgers 16 hinein, wo die Aufnahme 34 mit Abstand von der Spule 20 endet, so daß der Stirnflansch 18 die Schlitzklemme 38 von der Spule 20 elektrisch isoliert. Der die Aufnahme 34 bildende Schlitz 34 ist also länger als der das Drahtende 24 der Spule 20 aufnehmende Radialschlitz 32. Der die Aufnahme bildende Schlitz 34 geht in Querrichtung nicht durch die Halterung 28 hindurch, er ist an seinen beiden Längsseiten geschlossen.

Am Hydraulikblock 10 ist ein schachtelförmiges Kunststoff-Spritzguß-Gehäuse 40 mittels Schrauben 42 angebracht, das die Magnetteile der Magnetventile 12 umschließt. Mittels einer Gummidichtung 44 ist das Gehäuse 40 am Hydraulikblock 10 abgedichtet. In eine die Magnetteile der Magnetventile 12 mit Abstand vom Hydraulikblock 10 überdeckende Gehäusedecke 46 des Gehäuses 40 ist ein Stanzgitter 48 eingebettet, das mit dem die Gehäusedecke 46 bildenden Kunststoff umspritzt ist. Das an sich bekannte Stanzgitter 48 weist elektrisch voneinander isolierte Blechstreifen auf, die Leiterbahnen bilden, mit denen in der Zeichnung nicht dargestellte elektrische/elektronische Bauelemente miteinander verschaltet und mechanisch befestigt sind, die eine elektrische/elektronische Steuerschaltung zur Schlupfregelung der hydraulischen Fahrzeugbremsanlage bilden, deren Bestandteil der Hydraulikblock 10 ist. Durch das Umspritzen mit dem das Gehäuse 40 und die Gehäusedecke 46 bildenden Kunststoff sind die die Leiterbahnen bildenden Blechstreifen des Stanzgitters 46 mechanisch gehalten und elektrisch voneinander isoliert. Ein auf das Gehäuse 40 aufgesetzter Deckel 50 deckt die elektrischen/elektronischen Bauelemente der elektrischen/elektronischen Steuerschaltung ab.

Die in den Halterungen 28 des Wicklungsträgers 16 aufgenommenen Schlitzklemmen 38 sind einstückig mit Leiterbahnen des Stanzgitters 48. Die Schlitzklemmen 38 sind zungenförmige Abschnitte von Leiterbahnen des Stanzgitters 48, die im dargestellten Ausführungsbeispiel rechtwinklig zum Stanzgitter 48 in Richtung des Hydraulikblocks 10 umgebogen sind. An ihrem freien Ende ist ein Schlitz 52 in den Schlitzklemmen 38 angebracht, dessen Schlitzbreite kleiner als der Durchmesser der Drahtenden 24 der Spule 20 ist (Figur 4). In Seitenansicht weisen die Schlitzklemmen 38 ein Tannenbauprofil 54 auf, mit dem sie formschlüssig in den Halterungen 28 des Wicklungsträgers 16 festgekrallt sind.

Die Montage der erfindungsgemäßen Anordnung geschieht folgendermaßen: Zunächst werden die Magnetventile 12 in den Hydraulikblock 10 eingesetzt. Anschließend werden die Wicklungsträger 16, auf die die Spulen 20 bereits aufgewickelt sind, auf den Ventildom 14 der Magnetventile 12 gesteckt. Die Drahtenden 24 der Spulen 20 sind beim Wickeln der Spulen 20 auf die Wicklungsträger 16 in der bereits beschriebenen Weise in die Radialschlitze 32 der vom Stirnflansch 18 des Wicklungsträgers 16 abstehenden Halterungen 28 eingelegt und um die Fixierzapfen 36 gewickelt worden, d. h. die Drahtenden 24 sind in den Halterungen 28 quer zu einer Steckrichtung der Schlitzklemmen 38 auf dem Stirnflansch 18 der Wicklungsträger 16 fixiert. Nach dem Stecken der Wicklungsträger 16 auf die Magnetventile 12 wird das Gehäuse 40 auf den Hydraulikblock 10 aufgesetzt und mit diesem verschraubt. Beim Aufsetzen des Gehäuses 40 gelangen die Schlitzklemmen 38 in ihre Aufnahmen 34 in den Halterungen 28 der Wicklungsträger 16, die Drahtenden 24 der Spulen 20 gelangen in die Schlitze 52 der Schlitzklemmen 38, so daß die Spulen 20 durch eine Quetschkontaktierung mit Leiterbahnen des Stanzgitters 48 elektrisch leitend verbunden sind. Durch die sich in den Halterungen 28 festkrallende Tannenbaumprofilierung 54 der Schlitzklemmen 38 sind die Schlitzklemmen 38 und damit das mit den Schlitzklemmen 38 einstückige Stanzgitter 48 mechanisch mit den Wicklungsträgern 16 verbunden.

Die Erfindung ist nicht auf drahtförmige elektrische Anschlüsse (Drahtenden 24) beschränkt, es können beispielsweise auch zungenförmige elektrische Anschlüsse eines zu kontaktierenden elektrischen oder elektronischen Bauteils in die Schlitzklemmen 38 eingreifen (nicht dargestellt).

## Patentansprüche

1. Anordnung zur Kontaktierung eines einen elektrischen Anschluß (24) aufweisenden Magnetventils (12) mit einer elektrischen Schaltung, wobei das Magnetventil (12) in einen Hydraulikblock (10) eingesetzt ist und einen Magnetteil (14) mit einem eine Spule (20) tragenden Wicklungsträger (16) hat, an dem der elektrische Anschluß (24) fixiert ist, und der Magnetteil (14) von einem am Hydraulikblock (10) angebrachten Gehäuse (40) mit der darin angeordneten elektrischen Schaltung umschlossen ist, **dadurch gekennzeichnet, daß** die elektrische Schaltung eine zum Hydraulikblock (10) gerichtete Schlitzklemme (38) aufweist, die bei auf den Hydraulikblock (10) aufgesetztem Gehäuse (40) auf den elektrischen Anschluß aufgesteckt ist, welcher als Spulendraht (24) ausgebildet ist und näherungsweise quer zur Schlitzklemme (38) verläuft.

2. Anordnung nach Anspruch 1, **dadurch gekennzeichnet, daß** die elektrische Schaltung ein Stanzgitter (48) aufweist.

3. Anordnung nach Anspruch 2, **dadurch gekennzeichnet, daß** die Schlitzklemme (38) einstückig mit dem Stanzgitter (48) ist.

4. Anordnung nach Anspruch 1, **dadurch gekennzeichnet, daß** zumindest ein Drahtende (24) des Spulendrahts näherungsweise quer zur Schlitzklemme (38) am Wicklungsträger (16) fixiert ist.

5. Anordnung nach Anspruch 4, **dadurch gekennzeichnet, daß** der Wicklungsträger (16) eine schlitzförmige Aufnahme (34) für die Schlitzklemme (38) aufweist, in der die Schlitzklemme (38) einliegt.

6. Anordnung nach Anspruch 5, **dadurch gekennzeichnet, daß** die Schlitzklemme (38) ein Tannenbauprofil (54) aufweist, mit dem sie in der Aufnahme (34) festgekrallt ist.

7. Anordnung nach Anspruch 1, **dadurch gekennzeichnet, daß** der Hydraulikblock (10) mit dem Magnetventil (12) Teil einer hydraulischen Steuerschaltung einer Schlupfregeleinrichtung einer hydraulischen Fahrzeugbremsanlage ist, und daß die elektrische Schaltung eine elektronische Regelschaltung der Schlupfregeleinrichtung der hydraulischen Fahrzeugbremsanlage ist.

## Claims

1. Arrangement for making contact between a solenoid valve (12) which has an electrical connection (24) and an electrical circuit, with the solenoid valve (12) being inserted into a hydraulic block (10) and having a magnet part (14) with a winding former (16) to which a coil (20) is fitted and on which the electrical connection (24) is fixed, and with the magnet part (14) being surrounded by a housing (40), which is fitted to the hydraulic block (10), together with the electrical circuit that is arranged in it, **characterized in that** the electrical circuit has a slotted terminal (38) which points in the direction of the hydraulic block (10) and is plugged onto the electrical connection when the housing (40) is fitted to the hydraulic block (10), with this electrical connection being in the form of a coiled wire (24) and running approximately transversely with respect to the slotted terminal (38).

2. Arrangement according to Claim 1, **characterized in that** the electrical circuit is a stamped grating (48).

3. Arrangement according to Claim 2, **characterized in that** the slotted terminal (38) is integral with the stamped grating (48).

4. Arrangement according to Claim 1, **characterized in that** at least one wire end (24) of the coil wire is fixed to the winding former (16) approximately transversely with respect to the slotted terminal (38).

5. Arrangement according to Claim 4, **characterized in that** the winding former (16) has a holder (34), which is in the form of a slot, for the slotted terminal (38), in which the slotted terminal (38) is located.

6. Arrangement according to Claim 5, **characterized in that** the slotted terminal (38) has a pinetree profile (54), by means of which it is held firmly in the holder (34).

7. Arrangement according to Claim 1, **characterized in that** the hydraulic block (10), together with the solenoid valve (12), is part of a hydraulic control circuit for an anti-lock control device for a hydraulic vehicle braking system, and **in that** the electrical circuit is an electronic control circuit for the anti-lock control device for the hydraulic vehicle braking system.

## Revendications

1. Dispositif de contact entre une électrovanne (12) présentant une connexion électrique (24) et un circuit électrique, l'électrovanne (12) étant insérée dans un bloc hydraulique (10) et ayant une pièce magnétique (14) avec un support d'enroulement (16) portant une bobine (20), et sur lequel est fixée la connexion électrique (24), alors que la pièce magnétique (14) étant entourée par un boîtier (40) appliqué sur le bloc hydraulique (10) et logeant le circuit électrique,
**caractérisé en ce que**
le circuit électrique présente une borne de connexion à fente (38) orientée vers le bloc hydraulique (10), et qui lorsque le boîtier (40) est posé sur le bloc hydraulique (10) s'enfiche sur la connexion électrique formée comme fil à bobiner (24) qui passe pratiquement transversalement à la borne de connexion à fente (38).

2. Dispositif selon la revendication 1,
**caractérisé en ce que**
le circuit électrique présente une grille estampée (48).

3. Dispositif selon la revendication 2,
**caractérisé en ce que**
la borne de connexion à fente (38) est faite d'un seul tenant avec la grille estampée (48).

4. Dispositif selon la revendication 1,
**caractérisé en ce qu'**
au moins une extrémité du fil (24) du fil à bobiner est fixée pratiquement transversalement à la borne de connexion à fentes (38) sur le support d'enroulement (16).

5. Dispositif selon la revendication 4,
**caractérisé en ce que**
le support d'enroulement (16) présente un logement en forme de fente (34) pour la borne de connexion à fente (38), dans lequel repose la borne de connexion à fente (38).

6. Dispositif selon la revendication 5,
**caractérisé en ce que**
la borne de connexion à fente (38) présente un profil en arête de poisson (54) avec lequel elle est ancrée dans le logement (34).

7. Dispositif selon la revendication 1,
**caractérisé en ce que**
le bloc hydraulique (10) avec l'électrovanne (12) est une partie d'un circuit de commande hydraulique d'un dispositif de réglage du glissement d'une installation de freinage hydraulique de véhicule, et le circuit électrique est un circuit de réglage électronique du dispositif de réglage de glissement de l'installation de freinage hydraulique du véhicule.
